# EUROPEAN PATENT SPECIFICATION

(11) **EP 3 698 059 B1**
(45) Date of publication and mention of the grant of the patent: **09.02.2022**
(21) Application number: 18845480.5
(22) Date of filing: 17.10.2018
(51) Int. Cl.: F16C 33/10, F16C 17/10

(54) **A SINGLE-PIECE TURBO BEARING**
EINTEILIGES BUCHSENLAGER FÜR TURBOLADER
PALIER UNE PIECE POUR TURBO

(30) Priority: 17.10.2017 TR 201715924
(43) Date of publication of application: 26.08.2020
(73) Proprietor: Supsan Motor Supaplari Sanayii Ve Ticaret A.S., Küçükçekmece, Istanbul (TR)
(72) Inventor: KAYABASI, Iskender, Atasehir/Istanbul (TR); ALPAYA, Mert, Sisli/Istanbul (TR); HAMPARYAN, Burag, Küçükçekmece/Istanbul (TR); ÇAKIL, Semih, Akyurt/Ankara (TR); TEMIZ, Vedat, Beyoglu/Istanbul (TR); DOGRU, Ridvan, Atasehir/Istanbul (TR)
(86) International application number: PCT/TR2018/050596
(87) International publication number: WO 2019/078801

(56) References cited:
- US-A- 3 043 636
- US-A1- 2007 007 771

## Description

### TECHNICAL FIELD

The invention is related to a turbo system that enables increasing combustion efficiency and hence the motor power by delivering more compressed air into the combustion chamber in internal combustion engines.

Specifically, the invention is related to the turbo bearing that increases efficiency and power obtained from engines having small cylinder volume, that has lower cost, that is a single-piece component and that can bear axial loads.

### PRIOR ART

Turbo systems are rotating devices that increase combustion performance by delivering efficient compressed air into the combustion chamber in internal combustion engines. A turbo is generally driven by a turbine and the turbine and the suction impeller are connected to each other by a shaft. By driving the turbine, the suction impeller sucks the air, compresses it and discharges into the combustion chamber. So, power obtained by combustion with this oxygen-rich compressed air is increased. Thus, in internal combustion engines, higher powers can be obtained by consuming less energy.

The turbines present within the turbo charge systems used today are rotated by the exhaust gas released from the internal combustion engine after combustion. In super charge systems that operate by similar methods, the air is compressed by the drive received from the engine shaft instead of the turbo turbine.

The biggest advantage of the turbo charge systems is that the energy loss is minimal while rotating the turbo turbine and that they can be easily applicable to engines with small cylinder volumes.

Modern turbos used in the automotive industry may reach up to 250.000 rpm. In such cases, the importance of bearing comes into play in order to avoid damage to the turbo shaft due to extensive friction. Turbo bearing systems usually comprise of journal bearings made of bronze material and axial thrust bearings. It is of critical importance that the high-speed rotating parts operate without contacting any cover on the body.

In the current turbos, the film layer is formed by the film forming holes on the journal bearing and/or the grooves located inside the bearing and the friction inside the bearing is minimized by said film layer.

Turbo bearing systems can be divided into two, which are Rotating Floating Ring Bearing (RFRB) and Semi Floating Ring Bearing (SFRB). In RFRB systems, two films are formed which are between the central body and the bearing and between the bearing and the shaft.

In SFRB systems, similarly, there is only one hydrodynamic oil film only between the shaft and the bearing and this enables a better control of the rotor assembly. The external oil film formed in these systems is used for damping purposes.

The RFRB turbos that are usually implemented to small power engines in the market basically comprise two shaft bearings (journal bearings), one spacer, one axial thrust ring, and one axial thrust bearing. In SFRB turbos used in engines with more power, the bearing is provided by a single-piece structure.

In PCT document No.WO2007005478, a type of turbocharge bearing and related components are described. Said bearing comprises holes on its outer side that enable oil film formation. While said holes are effective in oil film formation, they can't make sure the turbo efficiency is sufficient at high rotational speeds.

In EPO document No.EP1002185, a kind of integrated bearing system is described. The bearing has a recessed structure that enables internal oil film formation. Moreover, said bearing also includes a groove structure which enables lubrication at the axial thrust bearing part. In the context of said embodiment, it is specifically suitable for small volume engines, but not for high-speed turbos.

Also US3043636 and US2007007771 patent documents do not allow optimum filming on the radial side surfaces.

Consequently, all the problems mentioned above make it necessary to bring a novelty in the related field.

### OBJECT OF THE INVENTION

The present invention makes it necessary to solve the abovementioned problems and bring a technical novelty in the related field.

The main object of the invention is to provide a low cost, single part bearing structure that is suitable for use in big or small volume internal combustion engines, that can operate at high speeds, and that enables reducing friction and power loss as compared to alternative types which enable better axial load bearing by forming oil film layer in axial direction.

Another object of the invention is to provide support and damping in order to control the axial and radial motions of the turbo shaft and impellers.

Yet another object of the invention is to reduce manufacturing cost by its single-piece structure as an alternative to turbo bearings comprising of at least five parts.

Another object of the invention is to provide ease of assembly and thus saving from labor through the single-piece bearing instead of complicated systems during assembly of the turbo.

Another object of the invention is to increase the efficiency of the turbo charge mechanism.

Another object of the invention is to increase the life of the turbo charge mechanism.

Another object of the invention is to provide formation of oil film inside the bearing by developing single-component semi-floating bearing systems.

Another object of the invention is to enable bearing radial and axial loads by developing single-component semi-sliding bearing systems.

Another object of the invention is to increase the efficiency of hydrodynamic bearing systems developed as an alternative to mechanical ball bearings.

### BRIEF DESCRIPTION OF THE INVENTION

In order to achieve all the above-mentioned objects that can become obvious from the detailed description provided below, the present invention is related to a single-piece turbo bearing that can bear axial loads along with the radial loads.

It is related to a single-piece, low-cost turbo bearing that increases power and efficiency obtained from internal combustion engines, that can bear axial loads along with radial loads, characterized by comprising one-piece axial support ring in connection with each other, at least one compressor side film forming hole and at least one turbine side film forming hole that enable oil film formation thereon, internal groove that lies along the force support surface which connects said compressor side film forming hole and turbine side film forming hole to axial support ring outer surface, ring surface recess on axial support ring and support surface recess on force support surface that increases axial load bearing capability and lubrication holes in connection with internal grooves on axial support ring and force support surface.

Another preferred embodiment of the invention comprises the single-piece bearing having axial support ring structure which controls the axial movement of the rotor assembly and which enables axial load bearing.

Another preferred embodiment of the invention comprises at least one internal groove that enables the formation of axial oil film that is inside the bearing, that is parallel to the axis of said bearing and that is located between the compressor side film forming holes and the axial support ring surface.

Another preferred embodiment of the invention comprises the internal groove that connects each compressor side film forming hole to the axial support ring surface.

Another preferred embodiment of the invention comprises at least one internal groove that enables axial oil film formation, that is inside the bearing that is parallel to the axis of said bearing that is located between the turbine side holes and the force support surface that forms the turbine side outer surface of the bearing.

Another preferred embodiment of the invention comprises the internal groove that connects each turbine side film forming hole to the force support surface.

Another preferred embodiment of the invention comprises at least one ring surface recess that increases axial load bearing capability of the turbo bearing where the oil comes from the lubrication holes located on the axial support ring surface.

Another preferred embodiment of the invention comprises at least one support surface recess that increases axial load bearing capability of the turbo bearing where the oil comes from the lubrication holes located on the force support ring surface.

Another preferred embodiment of the invention comprises at least one ring surface recess formed by a radial recess and at least one support surface recess formed by a radial recess.

Another preferred embodiment of the invention comprises six ring surface recesses and six support surface recesses.

Another preferred embodiment of the invention comprises the single-piece bearing that contains axial support ring structure which enables axial load bearing, that is made of bronze material and that controls the axial movement of the rotor assembly.

Another preferred embodiment of the invention comprises the single-piece bearing that contains axial support ring structure which enables axial load bearing, that is made of metal material and that controls the axial movement of the rotor assembly.

Another preferred embodiment of the invention comprises the single-piece bearing that contains axial support ring structure which enables axial load bearing, that is made of a metal alloy material and that controls the axial movement of the rotor assembly.

The scope of the invention is stated in the claims and it cannot be limited with what is described as an example in this brief and detailed description. The invention is defined in the appended claims.

### BRIEF DESCRIPTION OF THE FIGURES

Figure 1 shows the cross-section perspective view of the bearing body.
Figure 2 shows the front view of the turbo bearing.
Figure 3 shows the perspective view of the turbo bearing body.
Figure 4A shows the exploded view of the turbo bearing before assembly and Figure 4B shows the perspective view of the turbo bearing after assembly.
Figure 5A and 5B show the perspective view of the turbo bearing.
Figure 5C and 5D show two different cross-sections of the turbo bearing.

### DESCRIPTION OF REFERENCE NUMBERS IN FIGURES

- 10.: Body
101. Bearing housing
102. Oil pocket
103. Assembly housing
- 11.: Oil inlet groove
- 12.: Oil discharge groove
121. Compressor side oil groove
122. Turbine side oil groove
- 20.: Compressor impeller
201. Backplate
- 30.: Turbine impeller
301. Heat shield
- 40.: Shaft
- 50.: Bearing
501. Compressor side film forming hole
502. Turbine side film forming hole
503. Internal channel
5030. Lubrication hole
- 51.: Axial support ring
511. Ring surface recess
512. Installation recess
- 52.: Force support surface
521. Support surface recess
- 53.: Oil drain opening
- 54.: Fixing screw
- 60.: Fixing ring

### DETAILED DESCRIPTION OF THE INVENTION

In this detailed description, **a turbo bearing system** of the invention is described by non-limiting examples in order to provide a better understanding of the subject.

The invention is specifically related to the single-piece, low-cost turbo bearing that increases the power and efficiency obtained from small cylinder engines and that can bear axial loads along with radial loads.

The invention is characterized by comprising one-piece axial support ring (51) in connection with each other, at least one compressor side film forming hole (501) and at least one turbine side film forming hole (502) that enable oil film formation thereon, the internal channel (503) that lies along the force support surface (52) which connects said compressor side film forming hole (501) and turbine side film forming hole (502) to axial support ring (51) outer surface, ring surface recess (511) on axial support ring (51) and support surface recess (521) on force support surface (52) that increase axial load bearing capability and lubrication holes (503) in connection with internal channels (503) on axial support ring (51) and force support surface (52).

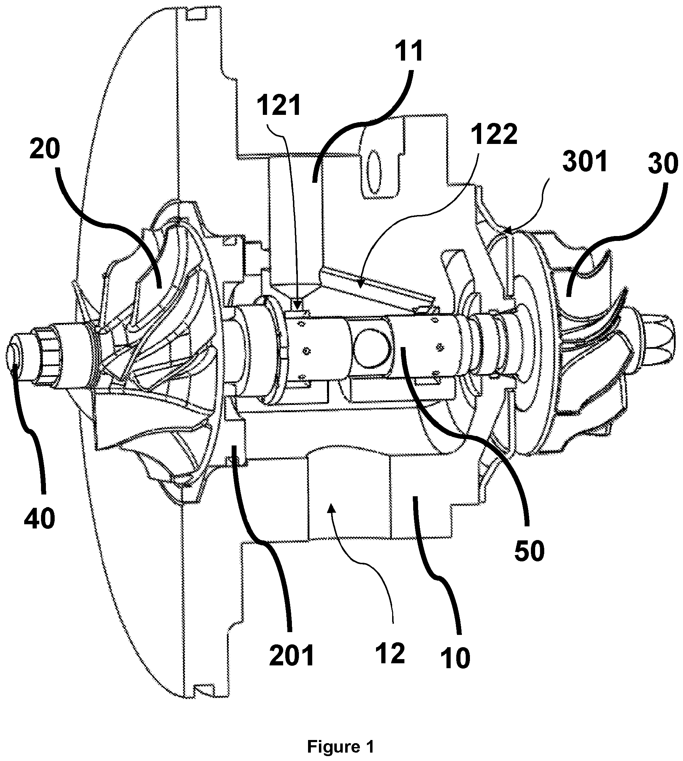

In Figure 1, the perspective view of the body (10) is shown. The turbine impeller (30) is connected to the rear end of the shaft (40) passing through the bearing (50) mounted inside the body (10). The compressor impeller (20) is mounted on the front end of the said shaft (40). The backplate (201) is positioned between the compressor impeller (20) and the body (10).

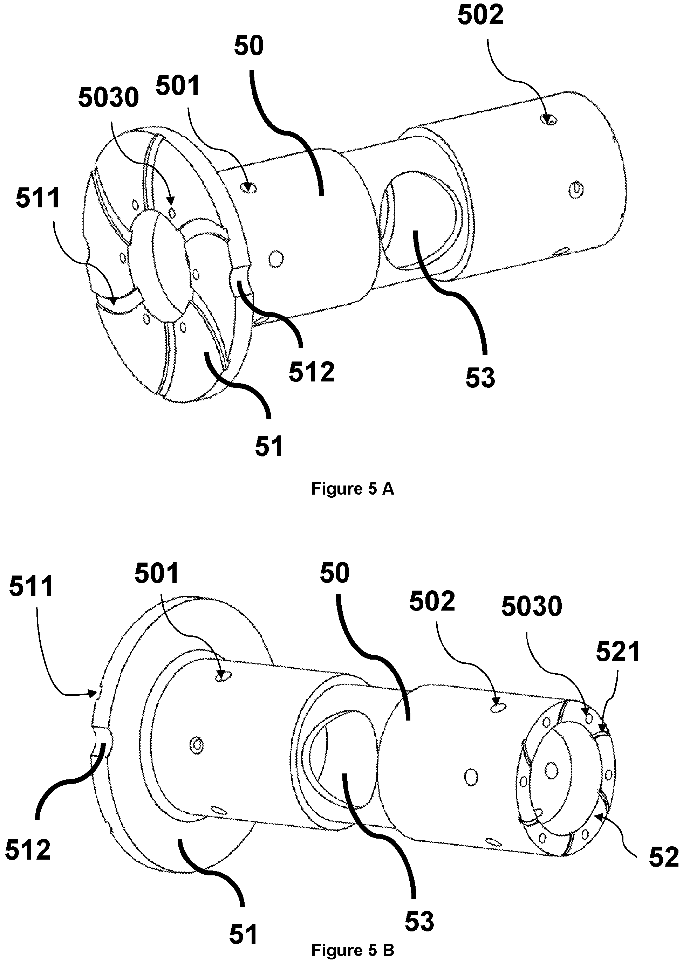

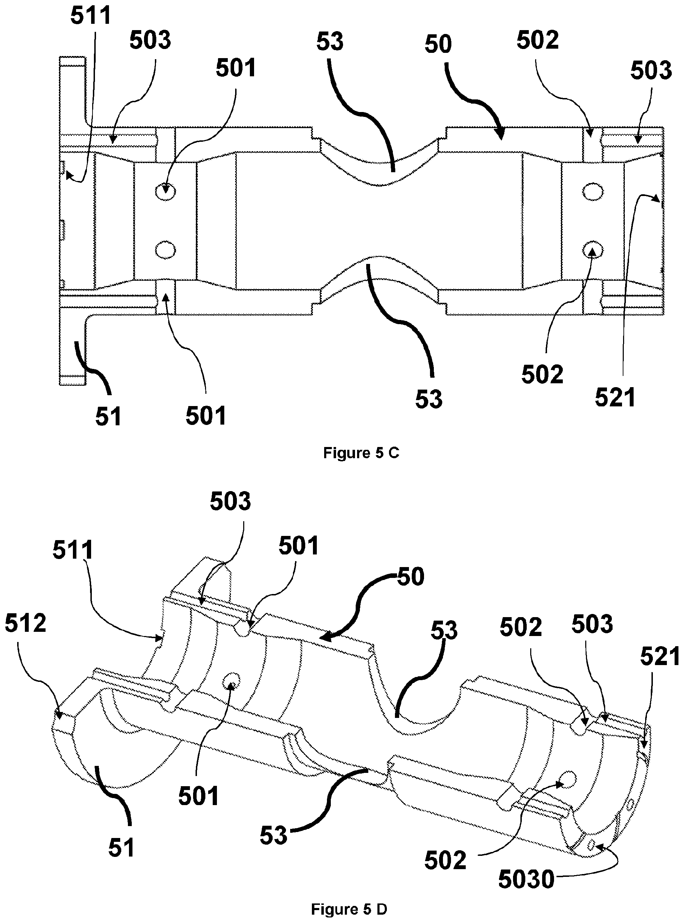

Figures 5A and 5B show the perspective view of the turbo bearing. The turbo bearing comprises the turbine side film forming holes (502) and the compressor side film forming holes (501). Figures 5C and 5D show the cross-sectional views where internal channels (503) inside the turbo bearing are shown. As seen on the figures, the bearing (50) is single-piece and preferably made of brass material.

In the turbo assembly wherein said bearing (50) is located, the support ring (51) connected to the bearing (50) is located on the compressor impeller (20) side. The axial support ring (51) and the bearing (50) are manufactured as a single-piece.

The heat shield (301) that protects the body (10) from the exhaust gas is located on the back of the turbine impeller (30). Thus, the bearing (50) part of the turbo is protected from overheating and so the turbo operates at desired performance.

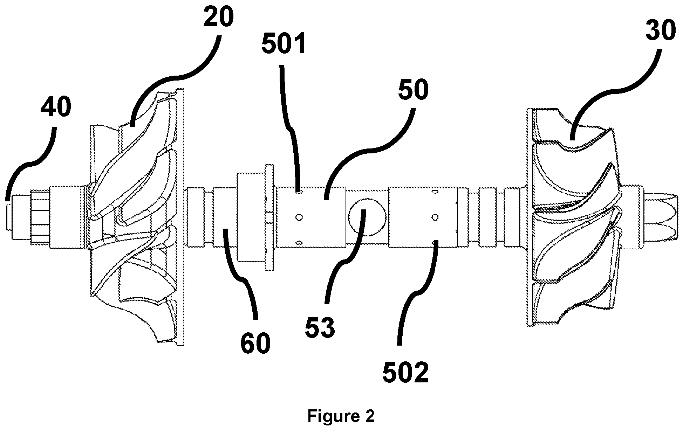

On the front side, the single-piece bearing (50) comprises axial support ring (51), compressor side film forming holes (501) and turbine side film forming holes (502) that enable formation of oil film inside the bearing (50) and internal channels (503) in connection with the compressor side film forming holes (501) and turbine side film forming holes (502) that enable formation of axial oil film around the bearing (50). As seen in Figure 2, the fixing ring (60) is positioned between the compressor impeller (20) and the axial support ring (51) contained within the bearing (50). Thus, the predetermined space between the axial support ring (51) and the compressor impeller (20) positioned on the shaft (40) is provided.

There is the oil inlet groove (11) on the upper part of the body (10) of the invention and the oil discharge groove (12) on the bottom part. The oil is conveyed to the body (10) and to the compressor side oil film forming hole (501) and turbine side film forming hole (502) of the bearing (50) through the compressor oil groove (121) and the turbine side oil groove (122) connected to the oil inlet groove (11). Said oil inlet groove (11), oil discharge groove (12), compressor side oil groove (121) and turbine side oil groove (122) are realized by boring the body during production of the body (10). In another preferred embodiment of the invention, the grooves mentioned in said process can be manufactured by machining or by molding the body.

The oil filled into the bearing (50) through the oil drain opening (53) of the bearing (50) is conveyed to the oil discharge groove (12) from this opening. In a preferred embodiment of the invention, there are at least one and preferably two oil drain openings (53).

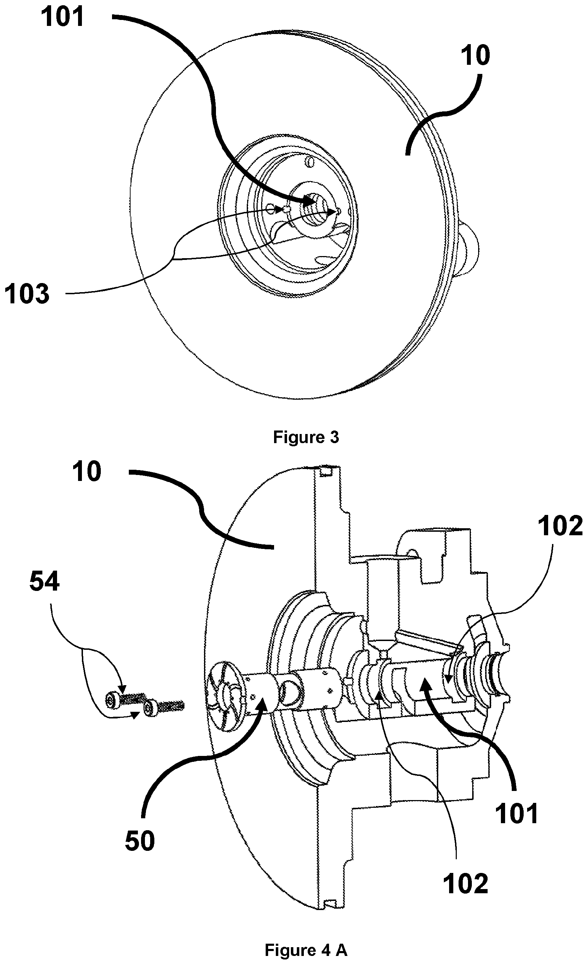

As seen in Figure 4A, the body (10) comprises a bearing housing (101) suitable with the bearing (50). Due to said bearing housing (101), the bearing (50) can be fixed and lubricated inside the body. Inside said bearing housing (101) and outside the compressor side film forming holes (501) and turbine side film forming holes (502), there are two oil pockets (102). Said oil pockets (102) are formed by recesses shaped on the inner surface of said bearing housing (101) around the bearing housing (101). The oil flowing onto the bearing through the compressor side oil groove (121) and the turbine side oil groove (122) over the oil pockets (102) enables the compressor side film forming holes (501) and the turbine side film forming holes (502) of the bearing (50) to form an oil film around the bearing (50).

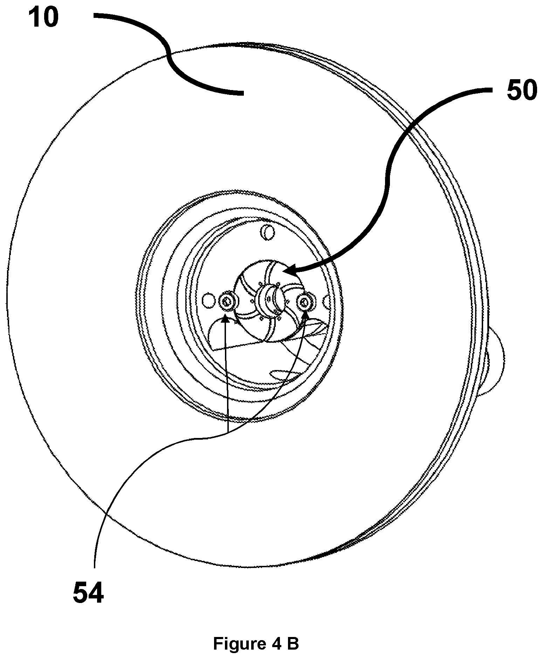

As seen in Figure 4A and Figure 4B, the bearing (50) is fixed to the bearing housing (101) inside the body (10) by preferably at least two fixing screws (54) and the installation recess (512) of the axial support ring (51) and the assembly housing (103) of the body (10). During fastening, the bearing (50) is loose fixed. By said fixing screws (54), the bearing (50) is protected from turning during operation of the turbo.

Due to the turbine side film forming holes (502) and the compressor side film forming holes (501) inside the bearing (50) that supports the shaft (40) radially rotated by driving the turbine impeller (30) of the turbo, a radial oil film is formed around the inner surface of said bearing (50).

In Figures 5C and 5D, the cross-section of the bearing (50) is shown. As seen in the figure, the bearing (50) comprises internal channels (503) that open to the turbine side film forming holes (502) and the compressor side film forming holes (501). By said internal channels, the axial oil film is formed around the bearing (50). In Figure 5A, the lubrication hole (5030) structure is positioned where said internal channels (503) are connected to the axial support ring (51) surface. Said lubrication hole (5030) is positioned on the surface for each internal channel (503). In a similar structure, there is lubrication hole (5030) where each internal channel (503) opens to the surface on the force support surface (52) of the bearing (50).

Formed oil film provides hydrodynamic support and thus the friction and power loss on the shaft (40) can be minimized. Since said oil film radially covers all the surface, the surface friction is minimized and supported. Thus, the high-speed turbo bearings can be realized without any problems.

By the ring surface recesses (511) of the axial support ring (51) and the support surface recesses (521) of the force support surface (52), the bearing (50) can bear axial loads.

By the internal channels (503) that open to the axial support ring (51) and the force support surface (52) through the lubrication holes (5030) in connection with the compressor side film forming holes (501) and the turbine side film forming holes (502) during rotation, the oil is conveyed to the ring surface recesses (511) and the support surface recesses (521).

As seen in Figure 1, the bearing compressor side oil groove (121) and the bearing turbine side oil groove (122) that provide oil flow between the bearing (50) and the oil inlet groove (11) positioned on the upper part of the body (10) are located inside the body (10). The oil sent into the turbo through the oil inlet groove (11) is conveyed onto the compressor side film forming holes (501) via the compressor side oil grooves (121). Similarly, transfer of oil from said oil inlet groove (11) to the turbine side film forming holes (502) is accomplished through the turbine side oil groove (122). The lubrication is performed reliably by the oil pockets (102) on the body (10).

## Claims

1. Turbo bearing that increases power and efficiency obtained from internal combustion engines, that is low cost and that can bear axial loads along with radial loads, wherein it comprises one-piece axial support ring (51) and bearing (50) body in connection with each other, at least one compressor side film forming hole (501) and at least one turbine side film forming hole (502) that each enable oil film formation on the bearing (50) outer surface, at least two internal channels (503) which one is connected from the force support surface (52) to mentioned compressor side film forming hole (501) and the other one is connected from the turbine side film forming hole (502) to the axial support ring (51) outer supporting surface, the turbo bearing further comprising at least one radially formed ring surface recess (511) on the axial support ring (51) which is positioned from inside edge to outside edge, at least one radially formed support surface recess (521) on the force support surface (52) which is positioned from inside edge to outside edge that increase axial load bearing capability and at least lubrication holes (5030) in connection with internal channel (503) on axial support ring (51) and force support surface (52).

2. Single-piece turbo bearing according to claim 1 wherein the single-piece bearing (50) having the axial support ring (51) structure controls the axial movement of the rotor assembly and enables axial load bearing

3. Single-piece turbo bearing according to claim 1 wherein at least one internal channel (503) between the compressor side film forming holes (501) and the axial support ring (51), enables formation of axial oil film, is inside the bearing (50) and is parallel to the axis of said bearing (50)

4. Single-piece turbo bearing according to claim 3 wherein said internal channel (503) connects each compressor side film formation hole (501) to the axial support ring (51) surface.

5. Single-piece turbo bearing according to claim 1 wherein at least one internal channel (503) is located between the turbine side film forming holes (502) and the force support surface (52) for forming the turbine side outer surface of the bearing (50), enables formation of axial oil film, is inside the bearing (50) and is parallel to the axis of said bearing (50)

6. Single-piece turbo bearing according to claim 5 wherein said internal channel (503) connects each turbine side film formation hole (501) to the force support surface (52).

7. Single-piece turbo bearing according to claim 1 wherein at least one ring surface recess (511) enables the oil conveyed through the lubrication holes (5030) on the axial support ring (51) surface to increase axial load bearing capability on the axial support ring (51) out surface.

8. Single-piece turbo bearing according to claim 7 that comprises six ring surface recesses (511).

9. Single-piece turbo bearing according to claim 1 that comprises at least one support surface recess (521) that enables the oil conveyed through the lubrication holes (5030) on the force support surface (52) to increase axial load bearing capability on the force support surface (52).

10. Single-piece turbo bearing according to claim 9 that comprises six support surface recesses (521).

11. Single-piece turbo bearing according to claim 1 wherein the bearing (50) having the axial support ring (51) structure is made of a brass material controls axial movement of the rotor assembly and enables axial load bearing.

12. Single-piece turbo bearing according to claim 1 wherein the axial support ring (51) structure is made of metal material, controls axial movement of the rotor assembly and enables axial load bearing

13. Single-piece turbo bearing according to claim wherein the bearing (50) having the axial support ring (51) structure is made of metal alloy material, controls axial movement of the rotor assembly and enables axial load bearing.

## Patentansprüche

1. Ein Turbolager, das die Leistung und den Wirkungsgrad von Verbrennungsmotoren erhöht, das kostengünstig ist und das axiale Lasten zusammen mit radialen Lasten tragen kann, wobei es einen einteiligen axialen Stützring (51) umfasst
und den Körper des Lagers (50) in Verbindung miteinander, mindestens ein verdichterseitiges Filmbildungsloch (501) und mindestens ein turbinenseitiges Filmbildungsloch (502), die jeweils die Bildung eines Ölfilms auf der Außenfläche des Lagers (50) ermöglichen, mindestens zwei innere Kanäle (503), von denen einer von der Kraftstützfläche (52) mit dem verdichterseitigen Filmbildungsloch (501) verbunden ist und der andere von dem turbinenseitigen Filmbildungsloch (502) mit der äußeren Stützfläche des axialen Stützrings (51) verbunden ist, wobei das Turbolager ferner mindestens eine radial geformte Ringflächenaussparung (511) aufweist auf dem axialen Stützring (51), die von der Innenkante zur Außenkante positioniert ist, mindestens eine radial geformte Stützflächenaussparung (521) auf der Kraftstützfläche (52), die von der Innenkante zur Außenkante positioniert ist, die die axiale Tragfähigkeit erhöht, und mindestens Schmierlöcher (5030) in Verbindung mit dem inneren Kanal (503) auf dem axialen Stützring (51) und der Kraftstützfläche (52).

2. Einteiliges Turbolager nach Anspruch 1, wobei das einteilige Lager (50) mit der Struktur des axialen Stützrings (51) die axiale Bewegung der Rotoreinheit steuert und die axiale Lastaufnahme ermöglicht.

3. Einteiliges Turbolager nach Anspruch 1, wobei mindestens ein innerer Kanal (503) zwischen den verdichterseitigen Filmbildungslöchern (501) und dem axialen Stützring (51), der die Bildung eines axialen Ölfilms ermöglicht, innerhalb des Lagers (50) liegt und parallel zur Achse des Lagers (50) verläuft.

4. Einteiliges Turbolager nach Anspruch 3, wobei der innere Kanal (503) jedes verdichterseitige Filmbildungsloch (501) mit der Oberfläche des axialen Stützrings (51) verbindet.

5. Einteiliges Turbolager nach Anspruch 1, bei dem mindestens ein innerer Kanal (503) zwischen den turbinenseitigen Filmbildungslöchern (502) und der Kraftstützfläche (52) zur Bildung der turbinenseitigen Außenfläche des Lagers (50) angeordnet ist, die Bildung eines axialen Ölfilms ermöglicht, sich innerhalb des Lagers (50) befindet und parallel zur Achse des Lagers (50) verläuft.

6. Einteiliges Turbolager nach Anspruch 5, wobei der innere Kanal (503) jedes turbinenseitige Filmbildungsloch (501) mit der Kraftstützfläche (52) verbindet.

7. Einteiliges Turbolager nach Anspruch 1, wobei mindestens eine Ringflächenaussparung (511) es ermöglicht, dass das durch die Schmierlöcher (5030) auf der Oberfläche des axialen Stützrings (51) geleitete Öl die axiale Tragfähigkeit auf der Außenfläche des axialen Stützrings (51) erhöht.

8. Einteiliges Turbolager nach Anspruch 7, das sechs Ringflächenaussparungen (511) aufweist.

9. Einteiliges Turbolager nach Anspruch 1, das mindestens eine Stützflächenaussparung (521) aufweist, die es ermöglicht, dass das durch die Schmierlöcher (5030) auf der Kraftstützfläche (52) geförderte Öl die axiale Tragfähigkeit auf der Kraftstützfläche (52) erhöht.

10. Einteiliges Turbolager nach Anspruch 9, das sechs Stützflächenaussparungen (521) aufweist.

11. Einteiliges Turbolager nach Anspruch 1, wobei das Lager (50) mit dem axialen Stützring (51) aus einem Messingmaterial hergestellt ist, das die axiale Bewegung der Rotoreinheit steuert und die Aufnahme von Axiallasten ermöglicht.

12. Einteiliges Turbolager nach Anspruch 1, bei dem die Struktur des axialen Stützrings (51) aus Metall besteht, die axiale Bewegung der Rotoreinheit steuert und eine axiale Lastaufnahme ermöglicht.

13. Einteiliges Turbolager nach Anspruch 1, wobei das Lager (50) mit dem axialen Stützring (51) aus einer Metalllegierung besteht, die axiale Bewegung der Rotoreinheit steuert und eine axiale Lastaufnahme ermöglicht.

## Revendications

1. Palier turbo qui augmente la puissance et le rendement obtenus par les moteurs à combustion interne, qui est de faible coût et qui peut supporter des charges axiales en même temps que des charges radiales, dans lequel il comprend une bague de support axial monobloc (51) et un corps de palier (50) en connexion l'un avec l'autre, au moins un trou de formation de film côté compresseur (501) et au moins un trou de formation de film côté turbine (502) qui permettent chacun la formation d'un film d'huile sur la surface extérieure du palier (50), au moins deux canaux internes (503) dont l'un est connecté depuis la surface de support de force (52) au trou de formation de film côté compresseur mentionné (501) et l'autre est connecté depuis le trou de formation de film côté turbine (502) à la surface de support externe de la bague de support axial (51), le palier turbo comprenant en outre au moins un évidement de surface de la bague formé radialement (511) sur la bague de support axial (51) qui est positionné du bord intérieur au bord extérieur, au moins un évidement de surface de support formé radialement (521) sur la surface de support de force (52) qui est positionné du bord intérieur au bord extérieur qui augmente la capacité de support de charge axiale et au moins des trous de lubrification (5030) en connexion avec le canal interne (503) sur la bague de support axial (51) et la surface de support de force (52).

2. Palier turbo monobloc selon la revendication 1, dans lequel le palier monobloc (50) ayant la structure de la bague de support axial (51) contrôle le mouvement axial de l'ensemble rotor et permet de supporter une charge axiale.

3. Palier turbo monobloc selon la revendication 1, dans lequel au moins un canal interne (503) entre les trous de formation de film côté compresseur (501) et la bague de support axial (51), permettant la formation d'un film d'huile axial, se trouve à l'intérieur du palier (50) et est parallèle à l'axe dudit palier (50).

4. Palier turbo monobloc selon la revendication 3, dans lequel ledit canal interne (503) connecte chaque trou de formation de film côté compresseur (501) à la surface de la bague de support axial (51).

5. Palier turbo monobloc selon la revendication 1, dans lequel au moins un canal interne (503) est situé entre les trous de formation de film côté turbine (502) et la surface de support de force (52) pour former la surface extérieure côté turbine du palier (50), permet la formation d'un film d'huile axial, se trouve à l'intérieur du palier (50) et est parallèle à l'axe dudit palier (50).

6. Palier turbo monobloc selon la revendication 5, dans lequel ledit canal interne (503) connecte chaque trou de formation de film côté turbine (501) à la surface de support de force (52).

7. Palier turbo monobloc selon la revendication 1, dans lequel au moins un évidement de surface de la bague (511) permet à l'huile transportée à travers les trous de lubrification (5030) sur la surface de la bague de support axial (51) d'augmenter la capacité de support de charge axiale sur la surface extérieure de la bague de support axial (51).

8. Palier turbo monobloc selon la revendication 7 qui comprend six évidements de la surface de la bague (511).

9. Palier turbo monobloc selon la revendication 1 qui comprend au moins un évidement de surface de support (521) qui permet à l'huile transportée à travers les trous de lubrification (5030) sur la surface de support de force (52) d'augmenter la capacité de support de charge axiale sur la surface de support de force (52).

10. Palier turbo monobloc selon la revendication 9 qui comprend six évidements de la surface de support (521).

11. Palier turbo monobloc selon la revendication 1, dans lequel le palier (50) ayant la structure de la bague de support axial (51) est fait d'un matériau en laiton contrôle le mouvement axial de l'ensemble rotor et permet de supporter une charge axiale.

12. Palier turbo monobloc selon la revendication 1, dans lequel la structure de la bague de support axial (51) est faite d'un matériau métallique, contrôle le mouvement axial de l'ensemble rotor et permet de supporter une charge axiale.

13. Palier turbo monobloc selon la revendication 1, dans lequel le palier (50) ayant la structure de la bague de support axial (51) est fait d'un matériau d'alliage métallique, contrôle le mouvement axial de l'ensemble rotor et permet de supporter une charge axiale.
